# EUROPEAN PATENT APPLICATION

(11) **EP 4 011 980 A1**
(43) Date of publication of application: **15.06.2022**
(21) Application number: 20849422.9
(22) Date of filing: 30.07.2020
(51) Int. Cl.: C08L 83/05, C08K 3/08, C08K 5/00, C08L 83/07

(54) **ORGANOHYDROGEN POLYSILOXANE EMULSION AND ADDITION-CURABLE SILICONE EMULSION COMPOSITION USING SAME**

(30) Priority: 05.08.2019 JP 2019143908
(71) Applicant: Shin-Etsu Chemical Co., Ltd., Tokyo 100-0005 (JP)
(72) Inventor: INOUE, Natsumi, Annaka-shi, Gunma 379-0224 (JP); YAMAMOTO, Kenji, Annaka-shi, Gunma 379-0224 (JP)
(74) Representative: V.O.
(86) International application number: PCT/JP2020/029274
(87) International publication number: WO 2021/024910

(57) **Abstract**

One of the purposes of the present invention is to provide an SiH group-containing polysiloxane emulsion composition having less risk of the expansion of a container during storage due to a dehydrogenation reaction with time, causing less deterioration in its performance, and having an excellent shelf life. Another purpose of the present invention is to provide an addition-curable silicone emulsion composition comprising the aforesaid emulsion composition and having excellent curability. Another purpose is to provide a cured film obtained by curing the aforesaid addition-curable silicone emulsion composition and having excellent light releasability from an adhesive. The present invention provides an emulsion composition comprising components (A), (B), (C) and (E):
100 parts by mass of (A) organohydrogenpolysiloxane having at least two hydrogen atoms each bonded to a silicon atom (i.e., SiH group) in one molecule, 0.1 to 20 parts by mass of (B) a nonionic surfactant, 0.01 to 50 parts by mass of (C) a buffer solution having a pH in the range of 4.0 to 6.0 at 25°C, and 30 to 10000 parts by mass of (E) water.

## Description

### TECHNICAL FIELD

The present invention relates to an emulsion composition comprising an organohydrogenpolysiloxane, which provides a product having less deterioration in the performance caused by a dehydrogenation reaction during storage with time and having an excellent shell life. The present invention further relates to an addition-curable silicone emulsion composition comprising the emulsion composition, and a release film obtained from the addition-curable silicone emulsion composition.

### BACKGROUND OF THE INVENTION

Various silicone compositions for release paper are well known to be applied on substrates such as paper and plastics. Among these, a solvent-type silicone has good release properties and is applicable on various substrates and, therefore, is widely used.

However, in recent years, a measure is desired to reduce the amount of solvent used or to collect used solvent and not to release the solvent in the environment from the standpoint of environmental contamination, safety and hygiene. For reducing the amount of solvent, a solventless-type silicone is effective. However, an expensive coating apparatus and special techniques are required to apply the solventless-type silicone uniformly with a film thickness of 0.1 to 2.0 g/m² on a substrate such as paper, laminate paper, or plastic film. Therefore, switching from a solvent-type silicone to a solventless-type silicone is generally not easy to employ. Coating with a thickness of 2.0 g/m² or more would increase production costs, which is not preferred.

An effective method for reducing the amount of solvent is use of an emulsion-type silicone. The emulsion-type of silicone has been used. For instance, Patent Literature 1 listed below describes a mixture of an emulsion comprising an organovinylpolysiloxane, a platinum compound, an emulsifier, and water with an emulsion comprising an organohydrogenpolysiloxane, an emulsifier and water. Patent Literature 2 describes an emulsion-type silicone obtained by emulsion polymerization. Patent Literature 3 describes a mixture of an emulsion obtained by emulsifying an organovinylsiloxane and an organohydrogenpolysiloxane by a specific emulsifying agent with an emulsion of a platinum compound.

The emulsion-type silicones can be arbitrarily diluted with water so that, , unlike a solventless-type silicone, they do not need an expensive coating apparatus or special technique for attaining a thin film. Thus, the emulsion-type silicone may be handled like a solvent-type silicone.

Addition-curable silicone emulsion compositions comprising an
organohydrogenpolysiloxane commonly have a defect such that the
organohydrogenpolysiloxane is in contact with water and a surfactant in the emulsion and, thereby, often causes a dehydrogenation reaction during storage or in a treatment bath. When the dehydrogenation reaction occurs, the amount of the active organohydrogenpolysiloxane in the composition decreases, and curability or adhesion may be worse. Particularly, when a plastic film is used as a substrate, the decrease in the amount of the
organohydrogenpolysiloxane due to a dehydrogenation reaction results in a decreased function as a crosslinking agent and is likely to adversely affect the adhesion between a cured silicone film and the substrate. A degassing cap prevents expansion of a container during transport or storage. If the cap is clogged for some reason, the container expands, which is dangerous. Therefore, an addition-curable silicone emulsion composition is desired which is less likely to cause a dehydrogenation reaction, even with the passage of time.

Patent Literature 4 describes an addition-curable silicone emulsion composition which has less deterioration in the performance. The addition-curable silicone emulsion composition comprises a crosslinking agent having a specific structure, and a specific surfactant. However, the dehydrogenation reaction in the early stage after the preparation is not sufficiently prevented.

### PRIOR LITERATURE

### PATENT LITERATURE

Patent Literature 1: Japanese Examined Patent Publication No. Sho57 (1982)-53143
Patent Literature 2: Japanese Patent Application Laid-Open No. Sho54 (1979)-52160
Patent Literature 3: Japanese Patent Application Laid-Open No. Sho63(1988)-314275
Patent Literature 4: Japanese Patent Application Laid-Open No. 2013-253176

### SUMMARY OF THE INVENTION

### PROBLEMS TO BE SOLVED BY THE INVENTION

The present invention has been made to overcome the aforesaid problems. One of the purposes of the present invention is to provide an SiH group-containing polysiloxane emulsion composition having less risk of expansion of a container during storage due to a dehydrogenation reaction with time, causing less deterioration in its performance, and having an excellent shelf life. Another purpose of the present invention is to provide an addition-curable silicone emulsion composition comprising the aforesaid emulsion composition and having excellent curability. Another purpose is to provide a cured film obtained by curing the aforesaid addition-curable silicone emulsion composition and having excellent light releasability from an adhesive.

### MEANS FOR SOLVING THE PROBLEMS

The present inventors conducted keen research to solve the aforesaid problems and have found that the dehydrogenation reaction of an organohydrogenpolysiloxane contained in an organohydrogenpolysiloxane-containing emulsion composition occurring with time during storage is suppressed by adding a buffer solution having a specific pH to adjust the pH of the emulsion, which results in less deterioration in the performance of the emulsion, and an excellent shelf life.

Further, the present inventors have found that an addition-curable silicone composition obtained by mixing the aforesaid emulsion composition with a silicone emulsion composition containing an alkenyl group-containing organopolysiloxane has excellent curability, and a cured film obtained by curing the aforesaid silicone composition has good light releasability from an adhesive.

That is, the present invention provides an emulsion composition comprising the following components (A), (B), (C) and (E):
100 parts by mass of (A) organohydrogenpolysiloxane having at least two hydrogen atoms each bonded to a silicon atom (i.e., SiH group) in one molecule,
0.1 to 20 parts by mass of (B) a nonionic surfactant,
0.01 to 50 parts by mass of (C) a buffer solution having a pH in the range of 4.0 to 6.0 at 25°C, and
30 to 10000 parts by mass of (E) water.

Further, the present invention provides an addition-curable silicone composition comprising (I) the emulsion composition, and the following components (F), (A'), (G), (H) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0 to 30 parts by mass of (A') an organohydrogenpolysiloxane having at least two hydrogen atoms each bonded to a silicon atom (i.e., SiH group) in one molecule,
0.1 to 20 parts by mass of (G) a surfactant, relative to a total 100 parts by mass of the components (F) and (A'),
a catalytic amount of (H) a platinum group metal catalyst, and
30 to 10000 parts by mass of (E) water,
wherein the ratio of the total number of the SiH group in components (A) and (A') to the number of the alkenyl group in component (F) in the addition-curable silicone composition, H/Vi, is 0.4 to 11.

The present invention further provides an addition-curable silicone composition, wherein the addition-curable silicone composition is a mixture of (I) the emulsion composition; (II-2) a silicone emulsion composition comprising the following components (F), (G) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.1 to 20 parts by mass of (G) a surfactant, relative to the total 100 parts by mass of the aforesaid component (F), and
30 to 10,000 parts by mass of (E) water;
   and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water,
wherein the ratio of the number of the SiH group to the number of the alkenyl group in the addition-curable silicone composition is 0.4 to 11, and the amount of the catalyst composition (III) is such that the amount of the platinum group metal is in the range of 1 to 1000 ppm, relative to the total mass of the silicone components (F) and (A) in the addition-curable silicone composition.

### EFFECTS OF THE INVENTION

The emulsion composition of the present invention has less deterioration in performance due to the dehydrogenation reaction with time during storage, has an excellent shelf life, and prevents the risk of deterioration in performance during transport or storage. The emulsion composition, more preferably comprising a catalyst, and the silicone emulsion composition comprising an alkenyl group-containing organopolysiloxane are stored separately and mixed immediately before coating to prepare the addition-curable silicone composition. The addition-curable silicone composition is excellent in shelf life and curability, and is suitable for a coating composition for release paper or release film. Further, wider release properties are easily obtained by changing the combination of emulsions to be mixed. A release film having light releasability from an adhesive is provided by coating the aforesaid addition-curable silicone composition onto a substrate, such as plastic film, and then curing.

### DETAILED DESCRIPTION OF THE INVENTION

The present invention will be explained below in more detail.

### Emulsion composition of an organohydrogenpolysiloxane

A first aspect of the present invention is to provide an emulsion composition (I) comprising the following components (A), (B), (C) and (E):
100 parts by mass of (A) organohydrogenpolysiloxane having at least two hydrogen atoms each bonded to a silicon atom (i.e., SiH group) in one molecule,
0.1 to 20 parts by mass of (B) a nonionic surfactant,
0.01 to 50 parts by mass of (C) a buffer solution having a pH in the range of 4.0 to 6.0 at 25°C, and
30 to 10000 parts by mass of (E) water.

### (A) Organohydrogenpolysiloxane

The organohydrogenpolysiloxane (A), which is the main component of the aforesaid emulsion composition (I), has at least two hydrogen atoms each bonded to a silicon atom (i.e., SiH group) in one molecule. The siloxane (A) is not particularly limited as far as it is not easily emulsified, nor emulsion stability is poor. It is preferably an organohydrogenpolysiloxane represented by the following formula (1) in order to give more desirable performance to the composition: 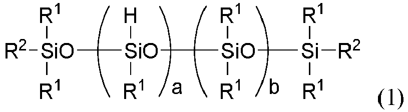 wherein R¹ is, independently of each other, a substituted or unsubstituted monovalent hydrocarbon group having 1 to 10 carbon atoms and no aliphatic unsaturated bond; R² is a hydrogen atom or a substituted or unsubstituted monovalent hydrocarbon group having 1 to 10 carbon atoms and no aliphatic unsaturated bond; and a and b are a positive number satisfying the equations: 0<a≤150, 0<b≤150 and 0<a+b≤200.

In the aforesaid formula (1), R¹ is, independently of each other, a substituted or unsubstituted monovalent hydrocarbon group having 1 to 10 carbon atoms, preferably 1 to 8 carbon atoms and no aliphatic unsaturated bond. Preferred examples include alkyl groups such as methyl, ethyl, propyl, and butyl groups, cycloalkyl groups such as a cyclohexyl group, and aryl groups such as phenyl and tolyl groups, and monovalent hydrocarbon groups selected from those groups in which a part or all of the hydrogen atoms are substituted with a hydroxyl group, a cyano group, or a halogen atom, such as hydroxypropyl, cyanoethyl, 1-chloropropyl, and 3,3,3-trifluoropropyl groups. A methyl group is particularly preferred.

R² is a hydrogen atom or a substituted or unsubstituted monovalent hydrocarbon group having 1 to 10 carbon atoms, preferably 1 to 8 carbon atoms and no aliphatic unsaturated bond. Examples of the monovalent hydrocarbon group include alkyl groups such as methyl, ethyl, propyl, and butyl groups, cycloalkyl groups such as a cyclohexyl group, and aryl groups such as phenyl and tolyl groups, and monovalent hydrocarbon groups selected from those groups in which a part or all of the hydrogen atoms are substituted with a hydroxyl group, a cyano group, or a halogen atom, such as hydroxypropyl, cyanoethyl, 1-chloropropyl, and 3,3,3-trifluoropropyl groups. A hydrogen atom and a methyl group are preferred.

In the aforesaid formula (1), a and b are, independently of each other, a positive number that satisfies the equations: 0<a≤150, 0<b≤150, and 0<a+b≤200, more preferably 10≤a≤100 and 10≤b≤100.

The organohydrogenpolysiloxane represented by the aforesaid formula (1) may be alone or a combination thereof. The organohydrogenpolysiloxane preferably has an average SiH group content, that is, the amount of the SiH group per 100 g of the organohydrogenpolysiloxane, in the range of 0.80 to 1.35 mol/100 g, more preferably in the range of 1.00 to 1.30 mol/100 g. If the SiH group content is less than the aforesaid lower limit, sufficient curability is not easily obtained. If the SiH group content is more than the aforesaid upper limit, a dehydrogenation reaction of the organohydrogenpolysiloxane in the emulsion composition may occur significantly, so that the shelf life of the emulsion may be short, and adhesion of the resulting coating to a plastic film substrate may be lower.

### (B) Nonionic surfactant

Component (B) is a nonionic surfactant. Examples of the nonionic surfactant include polyoxyalkylene alkyl ethers, polyoxyalkylene phenyl ethers, and polyoxyalkylene alkyl esters. More specifically, examples of the nonionic surfactant include alkyl ether-based surfactants such as polyoxyethylene lauryl ether, polyoxyethylene styrenated phenyl ether, and polyoxyethylene tridecyl ether and alkyl ester-based surfactants such as polyoxyethylene oleate and polyoxyethylene laurate. Among these, polyoxyethylene lauryl ether and polyoxyethylene styrenated phenyl ether are preferred. The aforesaid nonionic surfactants may be alone or a combination thereof. The nonionic surfactant preferably has preferably a HLB of 10 to 15 in order to obtain a stable emulsion composition. When two or more of the nonionic surfactant are used in combination, the HLB of their mixture is preferably 10 to 15.

The amount of the surfactant is desirably a minimum amount sufficient to give the silicone emulsion sufficient stability and wettability to a substrate. More specifically, it may be 0.1 to 20 parts by mass, preferably 0.5 to 15 parts by mass, relative to 100 parts by mass of the aforesaid organohydrogenpolysiloxane (A). When the amount is the aforesaid lower limit or more, emulsification is easier. When the amount is the aforesaid upper limit or less, the composition comprising the silicone emulsion has sufficient curability, which is preferred.

### (C) Buffer solution

In the present invention, the buffer solution (C) contained in the emulsion composition (I) has a pH in the range of 4.0 to 6.0, preferably 4.2 to 5.7, at 25°C. The emulsion composition comprising the buffer solution having the pH in the aforesaid range has a pH of 4.0 to 6.0, preferably a pH of 4.2 to 5.7. The emulsion composition having the aforesaid pH shows an effectively suppressed progress of the dehydrogenation reaction. Therefore, the addition-curable silicone composition comprising the silicone emulsion, as described later in detail, shows less decrease in the curability.

A buffer solution comprises a mixture of a weak acid and a salt thereof (conjugate base) or a weak base and a salt thereof (conjugate acid). The pH of the solution may be adjusted to the aforesaid range by properly combining them. Combination of acidic compounds and basic compounds is not particularly limited as far as the resulting mixture has a pH of 4.0 to 6.0. Examples of the combination include combinations of acetic acid and sodium acetate, acetic acid and potassium acetate, acetic acid and ammonium acetate, disodium hydrogen phosphate and potassium dihydrogen phosphate, disodium hydrogen phosphate and citric acid, citric acid and sodium citrate, citric acid and potassium citrate, hydrochloric acid and sodium citrate, and succinic acid and sodium succinate. Among these, the combination of acetic acid and sodium acetate, and the combination of disodium hydrogen phosphate and potassium dihydrogen phosphate, are preferred. An aqueous solution of these compounds may be used as the buffer solution.

The amount of the buffer solution (C) may be 0.01 part by mass to 50 parts by mass, relative to 100 parts by mass of the organohydrogenpolysiloxane (A). The amount of an effective component in the solution (that is, the amount of acid and base components in the aqueous solution) is preferably 1.4×10⁻⁴ part by mass to 10.0 parts by mass, particularly preferably 0.01 parts by mass to 3.0 parts by mass, relative to 100 parts by mass of the organohydrogenpolysiloxane (A). If the amount of the effective component is less than the aforesaid lower limit, the pH is not regulated easily. If the amount of the effective component is more than the aforesaid upper limit, the curability of the film may be adversely affected.

### (D) Antiseptic

The emulsion composition (I) of the present invention may further comprise an antiseptic. The antiseptic is not particularly limited and may be commercially available products. Examples of the antiseptic include isothiazoline-based, nitro-based, haloallylsulfone-based, iodopropargyl-based, N-haloalkylthio-based, benzimidazole-based, nitrile-based, pyridine-based, 8-oxyquinoline-based, benzothiazole-based, organotin-based, phenolic, quaternary ammonium salt-based, triazine-based, thiadiazin-based, anilide-based, adamantane-based, dithiocarbamate-based, inorganic salt-based, and bromated indanone-based compounds, parabens (para-hydroxybenzoate), benzoate salts, salicylate salts, sorbic acid, sorbate salts, dehydroacetate salts, paraoxybenzoic acid esters, benzalkonium chloride, hinokitiol, and resorcin. It may be alone or in combination thereof. In order to effectively obtain the effect of suppressing dehydrogenation in an acidic to neutral region, the antiseptic is preferably isothiazoline-based and nitro-based compounds, benzoate salts, and sorbate salts, more preferably isothiazoline-based and nitro-based compounds.

The amount of the antiseptic may be in such a range as to prevent growth of mildew or bacteria in the emulsion and not to damage the stability. However, the pH of the emulsion (I) is affected by the amount of the antiseptic. Therefore, the amount is preferably 0.001 to 1.0 parts by mass, particularly preferably 0.001 to 0.5 parts by mass, relative to 100 parts by mass of component (A). By regulating the amount of the antiseptic in the aforesaid range, the pH of the emulsion is adjusted in the range of 4.0 to 6.0, preferably 4.5 to 5.5, similar to that of the aforesaid buffer solution.

### (E) Water

The emulsion composition (I) of the present invention further comprises water. The amount of water is regulated to attain a viscosity suited for the coating apparatus used and the desired coating amount of silicone for the substrate, and is not particularly limited. It is preferably 30 to 10000 parts by mass, more preferably 50 to 5000 parts by mass, still more preferably 100 to 1000 parts by mass, relative to 100 parts by mass of the aforesaid organohydrogenpolysiloxane (A). When the amount is within the aforesaid range, an emulsion having good stability is obtained. Water having an impurity concentration as small as that of tap water may be sufficient. Water containing none of a strong acid, a strong alkali, a large amount of an alcohol, or a salt is preferred to maintain the stability of the emulsion.

The emulsification may be conducted using a general emulsifier/disperser. Examples of the emulsifier/disperser include high-speed rotational centrifugal radiation-type stirrer such as homodisper, high-speed rotational shearing type stirrer such as homo-mixer, high-pressure jetting type emulsifier/disperser such as pressure-type homogenizer, colloid mill, and ultrasonic emulsifier. The volume average particle diameter of the resulting emulsion is preferably 50 to 10,000 nm, particularly preferably 100 to 1,000 nm, as determined with a laser diffraction/scattering type particle diameter distribution analyzer.

### Addition-curable silicone composition

The present invention further provides an addition-curable silicone composition obtained by mixing the aforesaid emulsion composition (I) having the specific pH with the silicon emulsion composition (II) comprising the alkenyl group-containing organopolysiloxane (F). The timing of mixing the emulsion composition (I) with the silicone emulsion composition (II) is not particularly limited. It is preferred that the emulsion composition (I) and the silicone emulsion composition (II) are separately stored and mixed immediately before use (for example, coating on a substrate), so that the dehydrogenation reaction of the organohydrogensiloxane is suppressed, a long shelf life is attained, and the resulting composition shows an improved curability.

More specifically, the present invention provides an addition-curable silicone composition comprising (I) the emulsion composition and a silicone emulsion composition (II-1) comprising the following components (F), (A'), (G), (H) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0 to 30 parts by mass of (A') an organohydrogenpolysiloxane having at least two hydrogen atoms each bonded to a silicon atom (i.e., SiH group) in one molecule,
0.1 to 20 parts by mass of (G) a surfactant, relative to a total 100 parts by mass of the components (F) and (A'),
a catalytic amount of (H) a platinum group metal catalyst, and
30 to 10000 parts by mass of (E) water,
wherein the ratio of the total number of the SiH group in components (A) and (A') to the number of the alkenyl group in component (F) in the addition-curable silicone composition, H/Vi, is 0.4 to 11.

In a first preferred embodiment, the following catalyst mixture (I), a surfactant (G), and water (E) are mixed in the following amounts to prepare a catalyst composition in advance.

100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 parts by mass or more of (E) water.
In addition, the aforesaid components (F), (A') and (G) and water (E) are mixed in advance and mixed with the catalyst composition to prepare the silicone emulsion composition (II-1). The emulsion composition (I) and the silicone emulsion composition (II-1) are mixed to prepare the addition-curable silicone composition.
In the addition-curable silicone composition, the amount of each component is adjusted so as to satisfy the aforesaid amounts.

In a second embodiment of the addition-curable silicone composition, the present invention provides a three-pack type addition-curable silicone composition which is composed of the aforesaid emulsion composition (I); a silicone emulsion composition (II-2) comprising the following components (F), (G), and (E):
100 parts by mass of (F) organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.1 to 20 parts by mass of (G) a surfactant, relative to the total 100 parts by mass of the aforesaid component (F), and
30 to 10,000 parts by mass of (E) water;
   and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water.

Each component will be explained in more detail.

### (F) Alkenyl group-containing organopolysiloxane

The silicone emulsion compositions (II-1) and (II-2) each essentially comprise an alkenyl group-containing organopolysiloxane (F). Component (F) is the main component of the silicone emulsion compositions (II-1) and (II-2). Component (F) is an organopolysiloxane having at least two alkenyl groups each bonded to a silicon atom in one molecule and it does not adversely affect emulsification and the stability of the emulsion obtained. If the number of the alkenyl groups is less than two, curing does not occur, which is not preferred.

The aforesaid organopolysiloxane (F) has an absolute viscosity at 25°C of 10 mPa·s or more, more preferably 50 mPa·s or more; and a viscosity, as determined in a 30% solution in toluene at 25°C, of 50,000 mPa·s or less, more preferably 30,000 mPa·s or less. When the absolute viscosity is at the lower limit or more, the silicone emulsion composition has higher storage stability. If the viscosity is at the upper limit or less, emulsification is easier.

In particular, the organopolysiloxane is preferably such represented by the following formula (2) in order to obtain a release film having a more desirable property (that is, light releasability from an adhesive) from the addition-curable silicone composition.

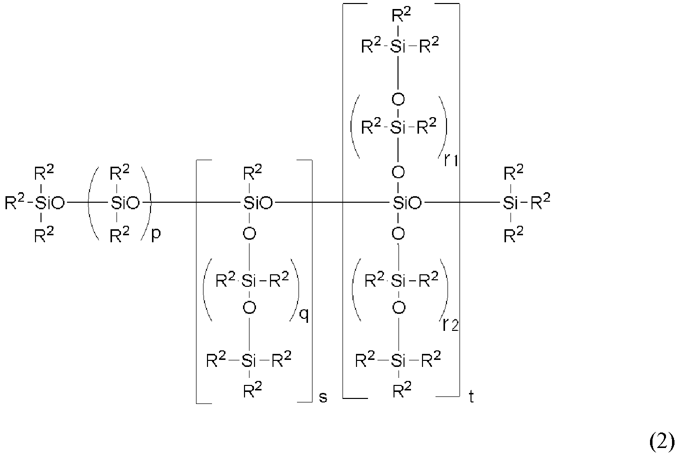

In the formula (2), R² is, independently of each other, a group selected from the group consisting of a substituted or unsubstituted monovalent hydrocarbon group having 1 to 20 carbon atoms and no aliphatic unsaturated bond, and an alkenyl group having 2 to 12 carbon atoms and being optionally intervened with an oxygen atom, provided that at least two of R² are an alkenyl group.

Examples of the monovalent hydrocarbon group having 1 to 20 carbon atoms and no aliphatic unsaturated bond include alkyl groups preferably having 1 to 6 carbon atoms such as methyl, ethyl, propyl, and butyl groups, cycloalkyl groups preferably having 5 to 8 carbon atoms such as a cyclohexyl group, aryl groups preferably having 6 to 10 carbon atoms such as phenyl and tolyl groups, and aralkyl groups preferably having 7 to 10 carbon atoms such as a benzyl group, and substituted hydrocarbon groups in which a part or all of the hydrogen atoms bonded to a carbon atom of these groups is substituted with a hydroxy group, an alkoxy group, a polyether group, an alkoxyalkyl group, an epoxy group, or a halogen atom e.g., hydroxypropyl, chloropropyl, and 3,3,3-trifluoropropyl groups). In particular, alkyl groups and aryl groups are preferred in view of releasability, with methyl, ethyl, propyl, and phenyl groups being more preferred.

The alkenyl group which has 2 to 12 carbon atoms and may be optionally intervened with an oxygen atom is preferably a group represented by -(CH₂)ₓ-CH=CH₂ (x is 0 or an integer of 1 to 10). In particular, examples of the alkenyl group include vinyl, propenyl, butenyl, hexenyl, octenyl, and decenyl groups. It may contain an ether bond in its methylene chain. The position of the oxygen atom (position of the ether bond) in the alkenyl group is not particularly limited. For example, the alkenyl group is -(CH₂)₂-O-CH₂-CH=CH₂ and -(CH₂)₃-O-CH₂-CH=CH₂. Among these, a vinyl group is preferred.

In the above formula, s and t are an integer satisfying the equation 0≤s+t≤20; and p, q, r1 and r2 satisfy the equations: 10≤p≤30,000, 0≤ q ≤500, 0≤ r1 ≤500, and 0≤ r2 ≤500. They are such that the viscosity of the organopolysiloxane (F) is in the aforesaid range. When the total of s and t is 20 or less, the organopolysiloxane (II-1) may be synthesized without causing gelation.

The organopolysiloxane (F) may be prepared by any known method. For example, trialkoxymethylsilane and dialkenyltetramethyldisiloxane or hexamethyldisiloxane are cohydrolyzed in an alcohol solvent in the presence of an acid catalyst. Examples of the acid catalyst include sulfuric acid, hydrochloric acid, phosphoric acid, activated clay, iron chloride, boric acid, trifluoroacetic acid, methanesulfonic acid, and trifluoromethanesulfonic acid. After the reaction mixture is neutralized, a by-produced alcohol is removed, the residue is washed with water, and any unreacted raw material is removed to obtain the intended organopolysiloxane. The catalyst may be an alkali catalyst, such as KOH, CsOH, NaOH, (CH₃)₄NOH, (n-C₄H₉)₄POH, and metal siliconates, such as potassium siliconate and phosphorus siliconate.

The organopolysiloxane (F) significantly influences the release force of the addition-curable silicone composition of the present invention. By changing the structure or the substituent of the organopolysiloxane, the release properties of a cured film obtained from the addition-curable silicone composition may be controlled.

The organopolysiloxane (F) is not necessarily a single compound and may be a mixture of a plurality of organopolysiloxanes different in structure, as long as they meet the aforesaid formula (2) as a whole. Examples of the organopolysiloxane (F) include, but are not limited to, the compounds represented by the following formulas. In the following formulas, Me, Vi, and Ph represent a methyl group, a vinyl group, and a phenyl group, respectively. 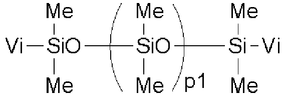 (150≦p1≦2,500) 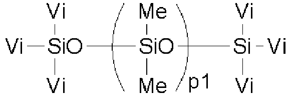 (150≦p1≦10,000) 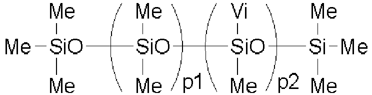 (150≦p1≦19,000;2≦p2≦500) 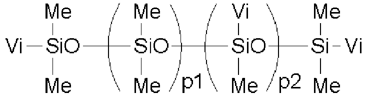 (150≦p1≦19,000; 1≦p2≦500) 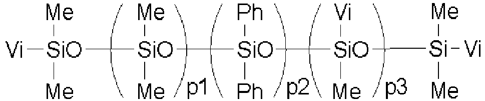 (150≦p1≦19,000; 1≦p2≦500; 1≦p3≦500) 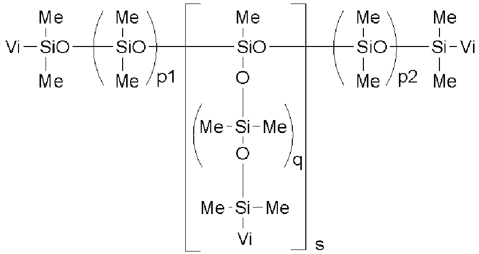 (150≦p1≦5,000; 1≦p2≦5000; 0≦q≦500; 1≦s≦20) 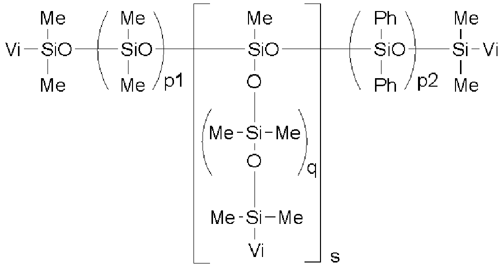 (150≦p1≦5,000; 1≦p2≦500; 0≦q≦500; 1≦s≦20) 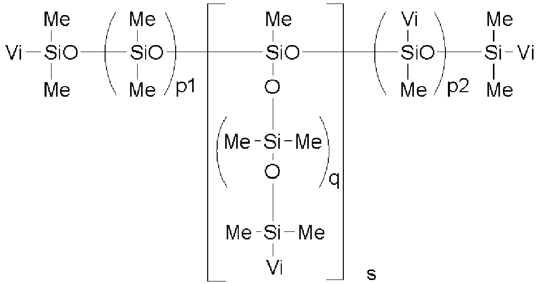 (150≦p1≦5,000; 1≦p2≦500; 0≦q≦500; 1≦s≦20) 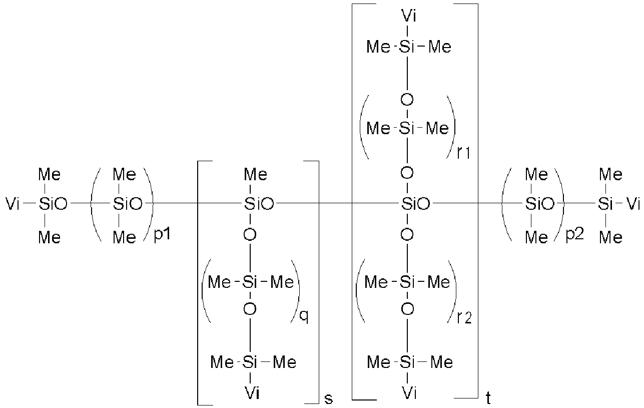 (150≦p1≦5,000; 0≦p2≦5,000; 0≦q≦500; 0≦r1≦500; 0≦r2≦500; 1≦s+t≦20) 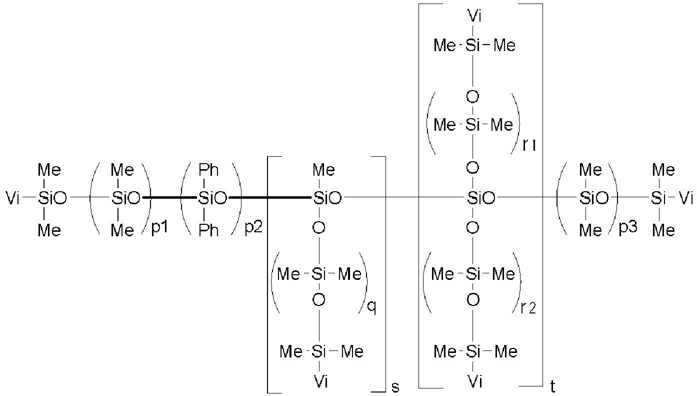 (15≦p1≦5,000; 1≦p2≦500; 150≦p3≦5,000; 0≦q≦500; 0≦r1≦500; 0≦r2≦500; 1≦s+t≦20)

### (A') Organohydrogenpolysiloxane

The silicone emulsion composition (II-1) optionally comprises an organohydrogenpolysiloxane (A'). The organohydrogenpolysiloxane (A') is as defined for the organohydrogenpolysiloxane (A) contained in the aforesaid emulsion composition (I). The amount of the organohydrogenpolysiloxane (A') is properly set depending on the amount of the alkenyl group of the organopolysiloxane (F). More specifically, the ratio of the total number of the SiH group in the organohydrogenpolysiloxanes (A) and (A') to the number of the alkenyl group in the organopolysiloxane (F), H/Vi, is preferably 0.4 to 11, more preferably 1 to 6. In view of the formation and release characteristics of a cured film, the amount of the organohydrogenpolysiloxane (A') may be 0 part by mass or more and 30 parts by mass or less, preferably 0.5 part by mass to less than 30 parts by mass, more preferably 1 to 15 parts by mass, relative to 100 parts by mass of the organopolysiloxane (F). When the amount of the organohydrogenpolysiloxane (A') is the aforesaid lower limit or more, curability is improved. When the amount is the upper limit or less, the release force does not exceed the practical limit.

### (G) Surfactant

The silicone emulsion compositions (II-1) and (II-2) each comprise the surfactant (G). The surfactant (G) is preferably of a nonionic type, for examples, alkyl ether type such as polyoxyethylene lauryl ether, polyoxyethylene styrenated phenyl ether, and polyoxyethylene tridecyl ether, and alkyl ester type such as polyoxyethylene oleate and polyoxyethylene laurate. Among these, polyoxyethylene lauryl ether and polyoxyethylene styrenated phenyl ether are preferred. The nonionic surfactant may be alone or in combination thereof. These nonionic surfactants, either alone or as a mixture, desirably have a HLB of 10 to 15 to obtain a stable silicone emulsion composition.

Anionic surfactants or cationic surfactants may be used but they are preferably used in combination with the nonionic surfactant in view of the stability of the silicone emulsion and the wettability thereof to a substrate. Examples of the anionic surfactants include higher alcohol sulfate ester salts, alkyl phenyl ether sulfate ester salts, alkylbenzene sulfonate salts, higher alcohol phosphate ester salts, ethoxylated higher alcohol sulfate ester salts, and ethoxylated higher alcohol phosphate salts. Examples of the cationic surfactants include alkyl trimethyl ammonium chlorides, alkyl amine hydrochloride salts, alkyl amine acetates, and alkyl benzene dimethyl ammonium chlorides.

The amount of the surfactant is desirably a minimum amount sufficient to attain the silicone emulsion's stability and wettability to a substrate. Specifically, in the silicone emulsion composition (II-1), the amount of the surfactant may be 0.1 to 20 parts by mass, preferably 0.5 to 15 parts by mass, relative to a total 100 parts by mass of the organopolysiloxane (F) and the organohydrogenpolysiloxane (A'). In the silicone emulsion composition (II-2), the amount of the surfactant may be 0.1 to 20 parts by mass, preferably 0.5 to 15 parts by mass, relative to 100 parts by mass of the organopolysiloxane (F). When the amount is in the aforesaid range, emulsification is easier and the addition-curable silicone composition has improved curability.

A water-soluble resin may be used in combination with the surfactant in order to aid the emulsification and improve the stability. Examples of the water-soluble resin include polyvinyl alcohol, cellulose derivatives, and Carbopol. Among these, polyvinyl alcohol is preferred. This water-soluble resin may function as a thickener. In particular, a water-soluble resin having least catalyst poisoning action to the platinum group metal catalyst (H) is preferred. The amount of the water-soluble resin is also desirably a minimum amount sufficient to give the silicone emulsion stability and wettability with a substrate, similarly with the aforesaid surfactant. For example, the amount is preferably 1 to 10 parts by mass, relative to a total 100 parts by mass of the organopolysiloxane (F) and the organohydrogenpolysiloxane (A').

### (H) Platinum group metal catalyst

The aforesaid silicone emulsion composition (II-1) comprises a platinum group metal catalyst. The platinum group metal catalyst promotes the addition reaction. Any known addition reaction catalyst may be used. Examples of the platinum group metal catalyst include platinum-based, palladium-based, rhodium-based, and ruthenium-based catalysts. Among these, platinum-based catalysts are particularly preferred. Examples of the platinum-based catalysts include chloroplatinic acid, an alcohol or aldehyde solution of chloroplatinic acid, and complexes of chloroplatinic acid with various olefins or vinyl siloxane.

The amount of the platinum group metal catalyst may be a catalytic amount. For example, the amount is preferably in a range of 1 to 1000 ppm, as a platinum group metal, relative to the total mass of the organopolysiloxane (F) and the organohydrogenpolysiloxane (A'), in order to obtain a good cured coating and for economy.

### (E) Water

The aforesaid silicone emulsion compositions (II-1) and (II-2) each comprise water (E). The amount of water (E) is not particularly limited and may be adjusted to satisfy the viscosity suited for the coating apparatus used and the desired amount of silicone to be applied to the substrate. The amount may be preferably 30 to 10000 parts by mass, more preferably 100 to 5000 parts by mass, still more preferably 100 to 3000 parts by mass, relative to 100 parts by mass of the organopolysiloxane (F). When the amount is the aforesaid lower limit or more, an O/W type emulsion can be obtained. When the amount is 10,000 parts by mass or less, the stability of the emulsion is maintained.

Water having an impurity concentration as small as in tap water may be satisffactory. Water containing none of a strong acid, a strong alkali, a large amount of an alcohol, or a salt is preferred to maintain the stability of the emulsion.

### Method of preparing the silicone emulsion compositions (II-1) and (II-2)

The silicone emulsion compositions (II-1) and (II-2) of the present invention are prepared by any known method. For example, the silicone emulsion composition (II-1) is obtained by mixing the predetermined amounts of the aforesaid component (F), the optional component (A'), and the component (G), and a part of the amount of the water (E) by a high shear stirrer such as a planetary mixer, a combination mixer, or a high-pressure homogenizer, emulsifying the resulting mixture by a phase inversion method, and diluting the resulting emulsion with the remaining amount of the water (E). The platinum group metal catalyst (H) is preferably emulsified in advance to obtain the emulsified catalyst composition (III) described later, and mixed with the other components immediately before use. The platinum group metal catalyst is preferably made dispersible in water before addition. This may be efficiently made, for example, by mixing it with the surfactant (G) in advance or by emulsifying it in advance as mentioned above.

The silicone emulsion composition (II-2) is obtained by mixing the predetermined amounts of the aforesaid component (F) and component (G), and a part of the amount of the water (E) by a high-shear stirrer such as a planetary mixer, a combination mixer, or a high-pressure homogenizer, emulsifying the resulting mixture by a phase inversion method, and diluting the resulting emulsion with the remaining amount of the water (E). Each of the components may be of a single species or a combination of plural species.

### Catalyst composition (III)

The catalyst composition (III) is added to a mixture of the emulsion composition (I) and the silicone emulsion composition (II-2), each comprising no catalyst, to prepare the addition-curable silicone composition. The catalyst composition (III) comprises a mixture of the platinum group metal catalyst (H) dispersed or dissolved in the organopolysiloxane defined as component (F), the aforesaid surfactant (G), and the aforesaid water (E). It is effective that the catalyst composition (III) is added to and mixed with a mixture of the emulsion composition (I) and the silicone emulsion composition (II-2). The amount of the platinum group metal catalyst may be a catalytic amount. More specifically, the amount of the platinum group metal catalyst may be preferably in a range of 1 to 1000 ppm, as a platinum group metal amount, relative to the total mass of the organopolysiloxane (F) contained in the silicone emulsion composition (II-2) and the organohydrogenpolysiloxane (A) contained in the emulsion composition (I) in order to obtain a good cured film and from an economic standpoint.

The surfactant (G) is as described above and the amount of it in the catalyst composition (III) is 0.1 to 20 parts by mass, preferably 0.5 to 10 parts by mass, relative to 100 parts by mass of the mixture obtained by dispersing or dissolving the platinum group metal catalyst (H) in the organopolysiloxane (F). The amount of water may be 30 to 10000 parts by mass, preferably 50 to 5000 parts by mass, more preferably 100 to 1000 parts by mass, relative to 100 parts by mass of the mixture obtained by dispersing or dissolving the aforesaid platinum group metal catalyst (H) in the aforesaid component.

### The first embodiment of the preparation of the addition-curable silicone composition (two-pack type of addition-curable silicone composition)

The two-pack type of addition-curable silicone composition comprises the aforesaid emulsion composition (I) and the catalyst-containing silicone emulsion composition (II-1), which are mixed in use. The ratio of the amounts of the emulsion composition (I) to the silicone emulsion composition (II-1) may be such that the total amount of the organohydrogenpolysiloxane (A) and the organohydrogenpolysiloxane (A') is in the range of 1 to 30 parts by mass, more preferably 1 to 15 parts by mass, relative to 100 parts by mass of the organopolysiloxane (F), in view of the formation and the release properties of a cured coating. When the amount is at the lower limit or more, curability is better. When the amount is at the upper limit or less, the release force is practical.

The catalyst-containing silicone emulsion composition (II-1) is a mixture of the silicone emulsion composition (II-1') and a catalyst composition (III).

Preferably, the catalyst composition is prepared in advance as described above and mixed immediately before use. The following preparation method is preferred.

A method for preparing the addition-curable silicone composition, wherein the method comprises a step of mixing (I) the emulsion composition; (II-1') a silicone emulsion composition comprising the following components (F), (A'), (G) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.5 to 30 parts by mass of (A') an organohydrogenpolysiloxane having at least two hydrogen atoms each bonded to a silicon atom (i.e., SiH group) in one molecule,
0.1 to 20 parts by mass of (G) a surfactant, relative to the total 100 parts by mass of component (F), and
30 to 10000 parts by mass of (E) water;
and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water,
to obtain the addition-curable silicone composition,
wherein the ratio of the number of the SiH group to the number of the alkenyl group in the addition-curable silicone composition is 0.4 to 11, and the amount of the catalyst composition (III) is such that the amount of the platinum group metal is in the range of 1 to 1000 ppm, relative to the total mass of the silicone components (F), (A') and (A) in the silicone composition.

### The second embodiment of the preparation of the addition-curable silicone composition (three-pack type of addition-curable silicone composition)

A three-pack type of addition-curable silicone composition comprises the aforesaid emulsion composition (I), the silicone emulsion composition (II-2) comprising no catalyst, and the catalyst composition (III), which are mixed in use. The silicone emulsion composition (II-2) does not comprise the organohydrogenpolysiloxane (A'). The organohydrogenpolysiloxane (A) comprised in the emulsion composition (I) reacts with the alkenyl group of component (F) to cause curing. The emulsion composition (I), the silicone emulsion composition (II-2), and the catalyst composition (III) are preferably each stored in a separate container and mixed immediately before use (for example, immediately before coating on a substrate) to avoid dehydrogenation reaction caused by a crosslinking agent (i.e., hydrogensiloxane) in the silicone emulsion composition (II-2) containing an alkenyl group component.

The method therefore comprises a step of mixing the emulsion composition (I); a silicone emulsion composition (II-2) comprising the following components (F), (G), and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.1 to 20 parts by mass of (G) a surfactant, relative to the total 100 parts by mass of the aforesaid component (F), and
30 to 10,000 parts by mass of (E) water;
and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water,
to obtain the addition-curable silicone composition,
wherein the ratio of the number of the SiH group to the number of the alkenyl group in the addition-curable silicone composition is 0.4 to 11, and the amount of the catalyst composition(III) is such that the amount of the platinum group metal is in the range of 1 to 1000 ppm, relative to the total mass of the silicone components (F) and (A) in the silicone composition.

The ratio of the aforesaid emulsion composition (I) and the silicone emulsion composition (II-2) is such that the amount of the organohydrogenpolysiloxane (A) in the emulsion composition (I) is preferably 1 to 30 parts by mass, more preferably 1 to 15 parts by mass, relative to 100 parts by mass of the organopolysiloxane (F) in the silicone emulsion composition (II-2), in view of the formation and the release properties of the cured coating. When the amount is at the lower limit or more, the curability is better. When the amount is at the upper limit or less, the release force is not larger than the practical limit. The molar ratio of the SiH group in component (A) to the alkenyl group in component (F), H/Vi, is preferably 0.40 to 11.0, more preferably 1.0 to 6.0. The amount of the aforesaid catalyst composition (III) is such that the amount of the platinum group metal is in the range of 1 to 1000 ppm, relative to the total mass of component (F) in the aforesaid silicone emulsion composition and component (A) in the emulsion composition (I).

### Other components

In the present invention, the addition-curable silicone composition may comprise optional components in addition to the aforesaid emulsion composition (I), the silicone emulsion composition (II-1) or (II-2), and the emulsion (III). The optional component may be a catalytic activity suppressing agent (or controlling agent) to suppress the catalytic activity of the platinum group metal catalyst, such as various organic nitrogen compounds, organophosphorus compounds, acetylene-based compounds, oximes, and organochloro compounds more specifically, acetylene-based alcohols such as 3-methyl-1-butyn-3-ol, 3,5-dimethyl-1-hexin-3-ol, 3-methyl-1-penten-3-ol, and phenylbutynol, acetylene-based compounds such as 3-methyl-3-1-penten-1-yne and 3,5-dimethyl-1-hexyn-3-yne, reaction products between these acetylene-based compounds and an alkoxysilane, siloxane, or hydrogensilane, vinylsiloxanes such as cyclic tetramethylvinylsiloxane, organic nitrogen compounds such as benzotriazole, and the organophosphorus compounds, the oxime compounds, and the organochromium compounds.

In addition, for the purpose of controlling the releasability, a silicone resin, silica, diallyl maleate, an organopolysiloxane having neither a hydrogen atom bonded to a silicon atom nor alkenyl group, a leveling agent such as a fluorinated surfactant, a water-soluble polymer such as methyl cellulose, and a thickener such as polyvinyl alcohol may be added, if desired. The amount of the optional component may be set as needed.

### Release film

A release film may be formed by applying the aforesaid addition-curable silicone composition on at least one surface of a substrate, such as a plastic film, and heat-curing the composition. Examples of the plastic film include polyolefin-based films such as a biaxially stretched polypropylene films, polyethylene films, and ethylene-propylene copolymer films and polyester films such as polyethylene terephthalate films. The thickness of these film substrates is not limited and may be about 5 to 100 µm.

The addition-curable silicone composition of the present invention may be applied on the substrate with a gravure coater, an air knife coater, a roll coater, or a wire bar. The coated amount is not particularly limited and may usually be about 0.1 to 2.0 g/m², more preferably 0.1 to 1.0 g/m², as the solid content of the silicone.

The substrate on which the addition-curable silicone composition of the present invention was applied is heated at 80°C to 160°C for about 3 minutes to 5 seconds, for example, with a hot air circulation dryer to form a cured film of silicone on the substrate so as to provide a releasability to the substrate. Alternatively, the film may be cured by exposure to infrared rays or ultraviolet rays. Using these methods in combination may improve the curing efficiency.

The addition-curable silicone composition of the present invention has excellent curability and a cured film obtained by curing the composition has light releasability from an adhesive, so that the composition is highly practical. Moreover, by heating the coated substrate at 80°C to 160°C for about 3 minutes to 5 seconds, a cured film of the silicone is formed on the substrate, so that a release film having releasability may be prepared easily without using an expensive apparatus or a complex process.

### EXAMPLES

The present invention will be explained below in further detail with reference to a series of the Examples and the Comparative Examples, although the present invention is in no way limited by these Examples.

In the following Examples and Comparative Examples, "part" or "parts" mean part or parts by mass. The physical property in the Tables were determined by the following test method. Unless otherwise specified, the viscosity means an absolute viscosity. The volume average particle diameter was determined by LA-960 (laser diffraction/scattering particle diameter distribution analyzer, ex Horiba, Ltd.).

### Examples 1 to 4 and Comparative Examples 1 and 2

### Preparation of an emulsion (I) comprising an organohydrogenl)olysiloxane and evaluation of the amount of generated hydrogen gas

### Preparation Example 1

An organohydrogenpolysiloxane (A1) used below was methylhydrogenpolysiloxane represented by the following formula: 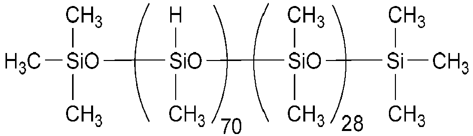 having a viscosity at 25°C of 122.2 mPa·s and an SiH group content of 1.080 mol/100 g and comprising 2 mol% of a trimethylsiloxane unit represented by (CH₃)₃SiO_{1/2}, 28 mol% of a dimethylsiloxane unit represented by (CH₃)₂SiO_{2/2}, and 70 mol% of a methylhydrogensiloxane unit represented by (CH₃)HSiO_{2/2}.

In a 5-L complex emulsifying apparatus (TK combi mix Model M, ex PRIMIX Corporation) equipped with an anchor type stirrer capable of stirring the whole space of the vessel, and with a rotatable disk having small serrated protrusions upward and downward, alternatively, at the periphery of the disk, were placed 100 parts by mass of the aforesaid organohydrogenpolysiloxane (A1) and 2.63 parts by mass of polyoxyethylene lauryl ether (HLB: 13.6) as the surfactant (B). Those were stirred and uniformly mixed to cause phase inversion. The stirring was continued for further 90 minutes. Then, 152.5 parts by mass of dilution water (E) was added and the resulting mixture was stirred to obtain the O/W type emulsion I having a silicone content of 38%.

### Preparation of buffer solutions

Buffer solutions used in the following Examples 1 to 4 and Comparative Examples 1 to 3 were prepared as follows.

### Buffer solution (C-1)

A 0.2 mol/L aqueous solution of acetic acid was mixed with a 0.2 mol/L aqueous solution of sodium acetate in a 16.4/3.6 volume ratio and stirred to prepare a buffer solution (C-1) having a pH of 4.0.

### Buffer solution (C-2)

A 0.2 mol/L aqueous solution of acetic acid was mixed with a 0.2 mol/L aqueous solution of sodium acetate in a 10.2/9.8 volume ratio and stirred to prepare a buffer solution (C-2) having a pH of 4.6.

### Buffer solution (C-3)

A 0.2 mol/L aqueous solution of acetic acid was mixed with a 0.2 mol/L aqueous solution of sodium acetate in a 5.9/14.1 volume ratio and stirred to prepare a buffer solution (C-3) having a pH of 5.0.

### Buffer solution (C-4)

A 0.2 mol/L aqueous solution of acetic acid was mixed with a 0.2 mol/L aqueous solution of sodium acetate in a 1.9/18.1 volume ratio and stirred to prepare a buffer solution (C-4) having a pH of 5.6.

### Buffer solution (C-5)

A 0.2 mol/L aqueous solution of acetic acid was mixed with a 0.2 mol/L aqueous solution of sodium acetate in a 18.5/1.5 volume ratio and stirred to prepare a buffer solution (C-5) having a pH of 3.6.

### Buffer solution (C-6)

Na₂HPO₄ and KH₂PO₄ were dissolved in water in a 4/1 mass ratio and stirred to prepare a buffer solution (C-6) having a pH of 7.0.

The antiseptics used in the following Examples and Comparative Examples were as follows:
(D-1) ACTICIDE LA2011 (trade name, mixture of isothiazoline-based compound and a nitro-based compound, ex Thor Japan Co., Ltd.)
(D-2) Sorbic acid

### <Example 1>

The buffer solution (C-1) and the antiseptic (D-1) were added to the emulsion 1 obtained in the aforesaid Preparation Example 1 in the composition described in Table 1 to obtain emulsion composition (1-1). The pH of the resulting emulsion composition was determined. The amount of the generated hydrogen gas was determined by the method described below. The results are as shown in Table 2.

### <Example 2>

The buffer solution (C-2) and the antiseptic (D-1) were added to the emulsion 1 obtained in the aforesaid Preparation Example 1 in the composition described in Table 1 to obtain an emulsion (1-2). The pH of the resulting emulsion composition was determined. The amount of the generated hydrogen gas was determined by the method described below. The results are as shown in Table 2.

### <Example 3>

The buffer solution (C-3) and the antiseptic (D-1) were added to the emulsion 1 obtained in the aforesaid Preparation Example 1 in the composition described in Table 1 to obtain an emulsion (1-3). The pH of the resulting emulsion composition was determined. The amount of the generated hydrogen gas was determined by the method described below. The results are as shown in Table 2.

### <Example 4>

The buffer solution (C-4) and the antiseptic (D-1) were added to the emulsion 1 obtained in the aforesaid Preparation Example 1 in the composition described in Table 1 to obtain an emulsion (1-4). The pH of the resulting emulsion composition was determined. The amount of the generated hydrogen gas was determined by the method described below. The results are as shown in Table 2.

### <Comparative Example 1>

The buffer solution (C-5) and the antiseptic (D-1) were added to the emulsion 1 obtained in the aforesaid Preparation Example 1 in the composition described in Table 1 to obtain an emulsion (I'). The pH of the resulting emulsion composition was determined. The amount of the generated hydrogen gas was determined by the method described below. The results are as shown in Table 2.

### <Comparative Example 2>

The antiseptic (D-2) was added to the emulsion 1 obtained in the aforesaid Preparation Example 1 in the composition described in Table 1 to obtain an emulsion (I"). The pH of the resulting emulsion composition was determined. The amount of the generated hydrogen gas was determined by the method described below. The results are as shown in Table 2.

### <Comparative Example 3>

The buffer solution (C-6) and the antiseptic (D-1) were added to the emulsion 1 obtained in the aforesaid Preparation Example 1 in the composition described in Table 1 to obtain an emulsion (I‴). The pH of the resulting emulsion composition was determined. The amount of the generated hydrogen gas was determined by the method described below. The results are as shown in Table 2.

### Amount of the generated hydrogen gas

The amount of the generated hydrogen gas was determined by the following method. One gram of an emulsion sample was put in a vial and the vial was hermetically sealed with a lid. Then, the aforesaid vial was allowed to stand in a dryer at 50°C for one day. The volume percentage of the hydrogen gas to the whole gas in the vial (H₂ volume in the vial/ volume of the whole gas in the vial, %) was determined by gas chromatograph (GC2014, ex SHIMADZU Corporation) equipped with a head space sampler (HS-20, ex SHIMADZU Corporation). The volume percentage thus obtained was converted into the hydrogen gas amount (mL) per gram of the sample allowed to stand at 50°C for one day, according to a calibration curve.

**[Table 1]**

| Component Parts by mass | | Example 1 | Example 2 | Example 3 | Example 4 | Comparative Example 1 | Comparative Example 2 | Comparative Example 3 |
|---|---|---|---|---|---|---|---|---|
| (A) | Organohydrogen polysiloxane (A1) | 100 | 100 | 100 | 100 | 100 | 100 | 100 |
| (B) | Surfactant | 2.63 | 2.63 | 2.63 | 2.63 | 2.63 | 2.63 | 2.63 |
| (C) | Buffer solution (C-1):pH4.0 | 3.5 | | | | - | | |
| | Buffer solution (C-2):pH4.6 | | 3.5 | | | | | |
| | Buffer solution (C-3):pH5.0 | | | 3.5 | | | | |
| | Buffer solution (C-4):pH5.6 | | | | 3.5 | | | |
| | Buffer solution (C-5):pH3.6 | | | | | 3.5 | | |
| | Buffer solution (C-6):pH7.0 | | | | | | | 1.45^{Note)} |
| (D) | Antiseptic (D-1) | 0.105 | 0.105 | 0.105 | 0.105 | 0.105 | | 0.105 |
| | Antiseptic (D-2) | | | | | | 0.079 | |
| (E) | Dilution water | 152.5 | 152.5 | 152.5 | 152.5 | 152.5 | 152.5 | 152.5 |

| | | | | | | | | |
|---|---|---|---|---|---|---|---|---|
| ^{Note)} Total parts by mass of Na₂HPO₄ powder and KH₂PO₄ powder | | | | | | | | |

**[Table 2]**

| Result | Example 1 | Example 2 | Example 3 | Example 4 | Comparative Example 1 | Comparative Example 2 | Comparative Example 3 |
|---|---|---|---|---|---|---|---|
| pH | 4.23 | 4.67 | 5.01 | 5.63 | 3.65 | 3.37 | 7.05 |
| Percentage of the generated hydrogen gas, % | 1.14 | 0.74 | 0.35 | 0.91 | 2.22 | 6.10 | 24.5 |
| Amount of the generated hydrogen gas, mL/g | 0.019 | 0.013 | 0.006 | 0.015 | 0.037 | 0.10 | 0.41 |

As seen in Table 2, the emulsions having a pH of 4.0 or less or around 7.0 generated large amounts of hydrogen gas after being allowed to stand at 50°C for one day (Comparative Examples 1 to 3). In contrast, the emulsions of the present invention generated smaller amounts of hydrogen gas (Examples 1 to 4) and, therefore, would have less risk of expanding a container and show less deterioration. In other words, when an emulsion having a pH of 4.0 to 6.0 is allowed to stand at 50°C for one day, the amount of the generated hydrogen gas is smaller and the emulsion has excellent stability. Further, when the emulsions of Examples 1 to 4 are compared to each other, the amount of the generated hydrogen gas is lowest and shelf life is particularly excellent around a pH of 5.0 of the emulsion.

### Examples 5 to 7

### Preparation and evaluation of the addition-curable silicone compositions

### Preparation of emulsions (I)

### Preparation Example 2

### Preparation of emulsion composition 1-2

In a 5-L complex emulsifier same as that used in Preparation Example 1, was placed 100 parts by mass of the aforesaid organohydrogenpolysiloxane (A1) and 3.28 parts by mass of polyoxyethylene lauryl ether (HLB: 13.6) as the surfactant (B). Those were stirred and uniformly mixed to cause phase inversion. The stirring was continued for further 90 minutes. Then, 5.17 parts by mass of an aqueous solution of acetic acid/sodium acetate (pH 5.0) as the buffer solution (C-3), 0.06 part by mass of ACTICIDE LA2011 (trade name, ex Thor Japan Co., Ltd.) as the antiseptic (D), and 55.3 parts by mass of dilution water (E) were added, and the resulting mixture was stirred to obtain O/W type emulsion composition 1-2 having a silicone content of 58%.

The resulting emulsion composition 1-2 had a pH of 5.13, a percentage of generated hydrogen gas (%) of 0.91, and showed the generated hydrogen amount (mL/g) of 0.015, as determined in the aforesaid manner.

### Preparation Example 3

### Preparation of emulsion composition 1-3

In a 5-L complex emulsifier same as that used in Preparation Example 1, was placed 100 parts by mass of the aforesaid organohydrogenpolysiloxane (A1), 3.2 parts by mass of polyoxyethylene lauryl ether (HLB: 17.5) as the surfactant (B), and 1.97 parts by mass of polyoxyethylene lauryl ether (HLB: 9.7). Those were stirred uniformly and mixed to cause phase inversion. The stirring was continued for further 90 minutes. Then, 5.17 parts by mass of an aqueous solution of acetic acid/sodium acetate (pH 5.0) as the buffer solution (C-3), 0.06 parts by mass of ACTICIDE LA2011 (trade name, ex Thor Japan Co., Ltd.) as the antiseptic (D), and 55.3 parts by mass of dilution water (E) were added, and the resulting mixture was stirred to obtain an O/W type emulsion composition 1-3 having a silicone content of 58%.

The resulting emulsion composition 1-3 has a pH of 5.02, a percentage of generated hydrogen gas (%) of 1.53, and a hydrogen gas amount (mL/g) of 0.025. The amount of the generated hydrogen gas is determined as described above.

### Preparation of the silicone emulsion compositions

The organopolysiloxane (F1) used in Preparation Examples 4 and 5 was an organopolysiloxane comprising 1.9 mol% of a dimethylvinylsiloxane unit represented by (CH₃)₂(CH₂=CH)SiO_{1/2}, 97.5 mol% of a dimethylsiloxane unit represented by (CH₃)₂SiO_{2/2}, and 0.6 mol% of a methylsiloxane unit represented by CH₃SiO_{3/2} and having a viscosity at 25°C of 252 mPa·s and a vinyl group content of 0.027 mol/100 g.

The organopolysiloxane (F2) used in Preparation Example 6 was a dimethylpolysiloxane having a vinyl group at both terminals, comprising 1.4 mol% of a dimethylvinylsiloxane unit represented by (CH₃)₂(CH₂=CH)SiO_{1/2} and 98.6 mol% of a dimethylsiloxane unit represented by (CH₃)₂SiO_{2/2}, and having a viscosity of 400 mPa·s and a vinyl group content of 0.02 mol/ 100 g.

The methylhydrogenpolysiloxane (A'1) used in Preparation Example 4 was an organohydrogenpolysiloxane comprising 2 mol% of a trimethylsiloxane unit represented by (CH₃)₃SiO_{1/2}, 28 mol% of a dimethylsiloxane unit represented by (CH₃)₂SiO_{2/2}, and 70 mol% of a methylhydrogensiloxane unit represented by (CH₃)HSiO_{2/2} and having a viscosity at 25°C of 122.2 mPa·s and an SiH group content of 1.080 mol/100 g.

### Preparation Example 4

### Silicone emulsion composition (II-1): silicone emulsion composition 4

In a 5-L complex emulsifier same as that used in Preparation Example 1, was placed 100 parts by mass of the aforesaid organopolysiloxane (F1), 3.58 parts by mass of the aforesaid methylhydrogenpolysiloxane (A'1), 0.78 parts by mass of polyoxyethylene lauryl ether (HLB: 13.6) as the surfactant (G), 51.95 parts by mass of a 10% aqueous solution of polyvinyl alcohol as a water-soluble resin (thickener), and 0.39 parts by mass of ethynyl cyclohexanol as a catalytic activity suppressor. Those were stirred uniformly and mixed to cause phase inversion and stirring was continued for further 15 minutes. Then, 103.04 parts of dilution water (E) was added, and the resulting mixture was stirred to obtain an O/W type silicone emulsion composition 4 having a silicone content of 40%.

### Preparation Example 5

### Silicone emulsion composition (II-2): silicone emulsion composition 5

In a 5-L complex emulsifier same as that used in Preparation Example 1, was placed 100 parts by mass of the aforesaid organopolysiloxane (F1), 0.78 parts by mass of polyoxyethylene lauryl ether (HLB: 13.6) as the surfactant (G), 51.95 parts by mass of a 10% aqueous solution of polyvinyl alcohol as the water-soluble resin (thickener), and 0.39 parts by mass of ethynyl cyclohexanol as the catalytic activity suppressor. Those were stirred uniformly and mixed to cause phase inversion and stirring was continued for further 15 minutes. Then, 103.04 parts of the dilution water (E) were added, and the resulting mixture was stirred to obtain an O/W type silicone emulsion composition 5 having a silicone content of 38.5%.

### Preparation Example 6

### Catalyst-containing emulsion (III): catalyst emulsion composition 6

In a 5-L complex emulsifier same as that used in Preparation Example 1, was placed 100 parts by mass of the aforesaid organopolysiloxane (F2) containing 0.4 parts by mass of a vinylsiloxane complex of chloroplatinic acid, 4.06 parts by mass of polyvinyl alcohol, and 0.97 parts by mass of polyoxyethylene lauryl ether (HLB: 13.6) as the surfactant (G). Those were emulsified to cause phase inversion and 0.09 part by mass of sorbic acid as the antiseptic and 383.80 parts by mass of the dilution water (E) were added. The resulting mixture was stirred to obtain an O/W type platinum catalyst emulsion composition 6 having a platinum mass of 150 ppm, relative to the silicone content in the coating solution.

### <Example 5>

### Addition-curable silicone composition 1

100 parts by mass of the silicone emulsion composition 4 obtained in Preparation Example 4 were diluted with water, to which 0.66 parts of the emulsion composition 1-2 obtained in Preparation Example 2 and 5 parts of the aforesaid platinum catalyst emulsion composition 6 (platinum mass of 150 ppm relative the silicone content) were added. The resulting mixture was stirred well to obtain addition-curable silicone composition 1.
the ratio of the number of the SiH group to the number of the alkenyl group contained in the addition-curable silicone composition, H/Vi, was 1.90. The addition-curable silicone composition 1 was applied on a PET film substrate (Diafoil 38 µm, trade name, ex Mitsubishi Chemical Corporation) in an amount of 0.40 g/m² and cured by heating at 130°C.

The curability, the release force, and the residual adhesion were determined by the methods described below. The results are as shown in Table 3.

### <Example 6>

### Addition-curable silicone composition 2

100 parts by mass of the silicone emulsion composition 4 obtained in Preparation Example 4 were diluted with water to which 0.66 part of the emulsion composition 1-3 obtained in Preparation Example 3 and 5 parts of the platinum catalyst emulsion composition 6 (a platinum mass of 150 ppm relative to the silicone content) were added. The resulting mixture was stirred well to obtain addition-curable silicone composition 2.

The ratio of the number of the SiH group to the number of the alkenyl group contained in the addition-curable silicone composition, H/Vi, was 1.90. The addition-curable silicone composition 2 was applied on a PET film substrate (Diafoil 38 µm, trade name, ex Mitsubishi Chemical Corporation) in an amount of 0.40 g/m² and cured by heating at 130°C.

The curability, release force, and residual adhesion were determined by the methods described below. The results are as shown in Table 3.

### <Example 7>

### Addition-curable silicone composition 3

100 parts by mass of the silicone emulsion composition 5 obtained in Preparation Example 5 were diluted with water and to which 2.4 parts of the emulsion composition 1-2 obtained in Preparation Example 2 and 5 parts of the platinum catalyst emulsion composition 6 (a platinum mass of 150 ppm relative to the silicone content) were added and mixed. The resulting mixture was stirred well to obtain an addition-curable silicone composition 3.

The ratio of the number of SiH group to the number of alkenyl group contained in the addition-curable silicone composition, H/Vi, was 1.46. The addition-curable silicone composition 3 was applied on a glassine paper substrate in an amount of 0.80 g/m² and cured by heating at 170°C.

The curability, release force, and residual adhesion were determined by the methods described below. The results are as shown in Table 3.

### Curability

Immediately after the preparation, each of the addition-curable silicone compositions 1 to 3 was applied on a PET substrate or a glassine substrate. The PET substrate was heated at 130°C and the glassine substrate was heated at 170°C, each with a hot air dryer for a certain time until the composition cured. The cured film thus formed was rubbed several times with a finger and was visually observed for cloudiness and whether the film fell off or not. The curability is expressed by the time (second) required for the curing.

### Release force

Immediately after the preparation, each of the addition-curable silicone compositions was cured in the manner similar to that for the determination of curability. The composition was applied on a PET substrate and cured at 130°C for 45 seconds. In addition, the composition was applied on a glassine substrate and cured at 170°C for 30 seconds. They were aged at room temperature for one day. Then, a 25 mm-wide adhesive tape (Tesa 7475 tape, trade name; ex Tesa Tape. Inc) was put on the cured coating, and a load of 70 g/cm² was applied thereto, followed by aging at room temperature for one day. Then, the adhesive tape was peeled off at an angle of 180° and a rate of 0.3 m/min by a tensile tester and to determine the force, in N/2.5 cm, required for the peeling.

### Residual adhesion

As in the determination of the release force, a cured film of the addition-curable silicone composition was formed. A polyester adhesive tape (Nitto 31B, trade name; ex Nitto Denko Corporation) was put on the surface of the cured coating. The layered one was heated at 70°C for 20 hours under of a load of 1976 Pa. The tape was peeled off and adhered on a stainless-steel plate. Then, the tape was peeled off to determine the force, in N/2.5 cm, required for the peeling. The residual adhesive strength, in percent, of the tape, in comparison with the adhesive strength of an unused polyester adhesive tape, was calculated.

As the residual adhesion is higher, the releasability of the release agent layer is better, which shows that a decrease in adhesion strength of a polyester adhesive tape adhered to the release agent layer is suppressed, that is, bleeding-out from a coating is suppressed.

**[Table 3]**

| Evaluation | Example 5 | Example 7 | Example 6 |
|---|---|---|---|
| Curability, sec. | 45 | 30 | 45 |
| Peeling force, N/2.5cm | 0.12 | 0.11 | 0.11 |
| Residual adhesion, % | 107 | 105 | 106 |

As seen in Table 3, the cured coatings obtained by curing the addition-curable silicone composition of the present invention shows sufficiently low releasability from an adhesive.

### INDUSTRIAL APPLICABILITY

The emulsion composition of the present invention shows less deterioration in performance due to hydrogen gas generated by the dehydrogenation reaction with time during storage, has an excellent shelf life, and less risk of deterioration in performance during transport and storage. Further, the addition-curable silicone composition which is obtained by mixing the emulsion composition and the silicone emulsion composition comprising an alkenyl group-containing organopolysiloxane immediately before use has excellent shelf life and curability and provides release paper and release film having light releasability from an adhesive layer.

## Claims

1. An emulsion composition comprising the following components (A), (B), (C) and (E):
100 parts by mass of (A) organohydrogenpolysiloxane having at least two hydrogen atoms each bonded to a silicon atom (i.e., SiH group) in one molecule,
0.1 to 20 parts by mass of (B) a nonionic surfactant,
0.01 to 50 parts by mass of (C) a buffer solution having a pH in the range of 4.0 to 6.0 at 25°C, and
30 to 10000 parts by mass of (E) water.

2. The emulsion composition according to claim 1, wherein the emulsion composition has a pH in the range of 4.0 to 6.0 at 25°C.

3. The emulsion composition according to claim 1 or claim 2, wherein the organohydrogenpolysiloxane (A) is represented by the following formula (1): 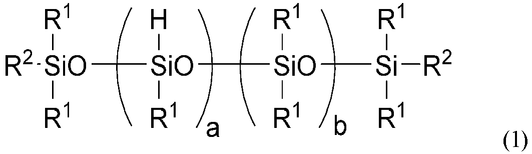 wherein R¹ is, independently of each other, a substituted or unsubstituted monovalent hydrocarbon group having 1 to 10 carbon atoms and no aliphatic unsaturated bond; R² is a hydrogen atom or a substituted or unsubstituted monovalent hydrocarbon group having 1 to 10 carbon atoms and no aliphatic unsaturated bond; and a and b are a positive number satisfying the equations: 0<a≤150, 0<b≤150 and 0<a+b≤200.

4. The emulsion composition according to any one of claims 1 to 3, wherein the nonionic surfactant (B) is at least one selected from the group consisting of polyoxyalkylene alkyl ethers, polyoxyalkylene phenyl ethers and polyoxyalkylene alkyl esters.

5. The emulsion composition according to any one of claims 1 to 4, wherein the amount of an effective component in the buffer solution (C) is 1.4×10⁻⁴ parts by mass to 10.0 parts by mass, relative to 100 parts by mass of the organohydrogenpolysiloxane (A).

6. The emulsion composition according to any one of claims 1 to 5, further comprising (D) an antiseptic in an amount of 0.001 to 1.0 part by mass.

7. The emulsion composition according to claim 6, wherein the antiseptic (D) is at least one selected from the group consisting of an isothiazolin compound, a nitro compound, a benzoate salt and a sorbate salt.

8. An addition-curable silicone composition comprising (I) the emulsion composition according to any one of claims 1 to 7, and the following components (F), (A'), (G), (H) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0 to 30 parts by mass of (A') an organohydrogenpolysiloxane having at least two hydrogen atoms each bonded to a silicon atom (i.e., SiH group) in one molecule,
0.1 to 20 parts by mass of (G) a surfactant, relative to a total 100 parts by mass of the components (F) and (A'),
a catalytic amount of (H) a platinum group metal catalyst, and
30 to 10000 parts by mass of (E) water,
wherein the ratio of the total number of the SiH group in components (A) and (A') to the number of the alkenyl group in component (F) in the addition-curable silicone composition, H/Vi, is 0.4 to 11.

9. An addition-curable silicone composition, wherein the composition is a mixture of (I) the emulsion composition according to any one of claims 1 to 7; (II -2) a silicone emulsion composition comprising the following components (F), (G) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.1 to 20 parts by mass of (G) a surfactant, relative to the total 100 parts by mass of the aforesaid component (F), and
30 to 10,000 parts by mass of (E) water;
and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water,
wherein the ratio of the number of the SiH group to the number of the alkenyl group in the addition-curable silicone composition is 0.4 to 11, and the amount of the catalyst composition (III) is such that the amount of the platinum group metal is in the range of 1 to 1000 ppm, relative to the total mass of the silicone components (F) and (A) in the addition-curable silicone composition.

10. The addition-curable silicone composition according to claim 8 or claim 9, wherein component (F) is represented by the following formula (2): 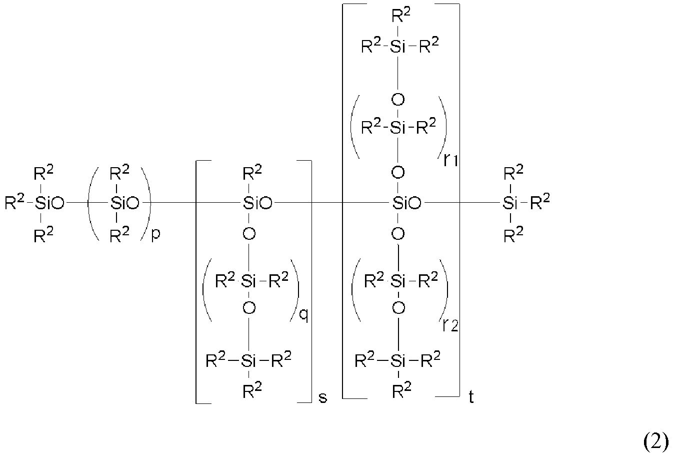 wherein R² is, independently of each other, a group selected from the group consisting of a substituted or unsubstituted monovalent hydrocarbon group having 1 to 20 carbon atoms and no aliphatic unsaturated bond, and an alkenyl group having 2 to 12 carbon atoms and being optionally intervened with an oxygen atom, provided that at least two of R² are an alkenyl group; p, q, r¹ and r² satisfy the equations 10≤p≤30,000, 0≤ q ≤500, 0≤ r¹ ≤500, and 0≤ r² ≤500; and s and t are a positive number satisfying the equation 0≤s+t≤20.

11. A release film comprising a substrate and a cured coating of the addition-curable silicone composition according to any one of claims 8 to 10, wherein the coating is layered on one or both surfaces of the substrate.

12. A method for preparing an addition-curable silicone composition, wherein the method comprises a step of mixing (I) the emulsion composition according to any one of claims 1 to 7; (II-1') a silicone emulsion composition comprising the following components (F), (A'), (G) and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.5 to 30 parts by mass of (A') an organohydrogenpolysiloxane having at least two hydrogen atoms each bonded to a silicon atom (i.e., SiH group) in one molecule,
0.1 to 20 parts by mass of (G) a surfactant, relative to 100 parts by mass of component (F), and
30 to 10000 parts by mass of (E) water;
and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water,
to obtain the addition-curable silicone composition,
wherein the ratio of the number of the SiH group to the number of the alkenyl group in the addition-curable silicone composition is 0.4 to 11, and the amount of the catalyst composition (III) is such that the amount of the platinum group metal is in the range of 1 to 1000 ppm, relative to the total mass of the silicone components (F), (A') and (A) in the addition-curable silicone composition.

13. A method for preparing an addition-curable silicone composition, wherein the method comprises a step of mixing (I) the emulsion composition according to any one of claims 1 to 7; (II-2) a silicone emulsion composition comprising the following components (F), (G), and (E):
100 parts by mass of (F) an organopolysiloxane having at least two alkenyl groups each bonded to a silicon atom and having an absolute viscosity at 25°C of 10 mPa·s or more and, as determined in a 30% solution in toluene, of 50,000 mPa·s or less,
0.1 to 20 parts by mass of (G) a surfactant, relative to 100 parts by mass of the aforesaid component (F) and
30 to 10,000 parts by mass of (E) water;
and a catalyst composition (III) comprising the following components (I), (G), and (E):
100 parts by mass of (I) a mixture of a catalytic amount of a platinum group metal catalyst (H) and an organopolysiloxane defined as component (F) dissolving or dispersing the platinum group metal catalyst (H),
0.1 to 20 parts by mass of (G) a surfactant, and
30 to 10000 parts by mass of (E) water,
to obtain the addition-curable silicone composition,
wherein the ratio of the number of the SiH group to the number of the alkenyl group in the addition-curable silicone composition is 0.4 to 11, and the amount of the catalyst composition (III) is such that the amount of the platinum group metal is in the range of 1 to 1000 ppm, relative to the total mass of the silicone components (F) and (A) in the addition-curable silicone composition.
